# FASCICULE DE BREVET EUROPEEN

(11) **EP 1 029 652 B1**
(45) Date de publication et mention de la délivrance du brevet: **02.05.2003**
(21) Numéro de dépôt: 00410015.2
(22) Date de dépôt: 15.02.2000
(51) Int. Cl.: B29C 67/24, B29B 7/76, B29B 7/84, B01F 15/00

(54) **Dispositif mélangeur sous vide pour la coulée de matériaux plastiques polymérisables**
Vakuummischvorrichtung zum Reaktionsgiessen von Kunststoffen
Vacuum mixing device for reactive casting of plastics

(30) Priorité: 15.02.1999 FR 9901970
(43) Date de publication de la demande: 23.08.2000
(73) Titulaire: Secmer, 38000 Grenoble (FR)
(72) Inventeur: Pernin, Gérard, 38700 Corenc (FR); Felten, Alain, 2 bis rue du Grésivaudan, 38240 Domene (FR)
(74) Mandataire: Hecké, Gérard

(56) Documents cités:
- EP-A- 0 473 942
- WO-A-87/01328
- DE-B- 1 198 531
- GB-A- 1 123 166
- US-A- 3 621 892
- US-A- 4 439 386
- US-A- 5 409 523
- PATENT ABSTRACTS OF JAPAN vol. 010, no. 238 (M-508), 16 août 1986 (1986-08-16) & JP 61 069406 A (MATSUSHITA ELECTRIC IND CO LTD), 10 avril 1986 (1986-04-10)
- PATENT ABSTRACTS OF JAPAN vol. 011, no. 114 (M-579), 10 avril 1987 (1987-04-10) & JP 61 258712 A (MATSUSHITA ELECTRIC IND CO LTD), 17 novembre 1986 (1986-11-17)
- PATENT ABSTRACTS OF JAPAN vol. 010, no. 292 (C-376), 3 octobre 1986 (1986-10-03) & JP 61 111130 A (OKI ELECTRIC IND CO LTD;OTHERS: 01), 29 mai 1986 (1986-05-29)
- PATENT ABSTRACTS OF JAPAN vol. 010, no. 311 (M-528), 23 octobre 1986 (1986-10-23) & JP 61 121903 A (MATSUSHITA ELECTRIC IND CO LTD), 9 juin 1986 (1986-06-09)
- PATENT ABSTRACTS OF JAPAN vol. 009, no. 294 (M-431), 20 novembre 1985 (1985-11-20) & JP 60 131214 A (MATSUSHITA DENKI SANGYO KK), 12 juillet 1985 (1985-07-12)

## Description

### Domaine technique de l'invention

L'invention est relative à un dispositif mélangeur pour la coulée de matériaux plastiques à base de produits polymérisables, comprenant :
- une chambre de mélange pour la réception des produits de base entrant dans la composition chimique du mélange réactif,
- des orifices d'admission ménagés à l'entrée de ladite chambre et coopérant avec des vannes d'admission des produits de base en provenance d'au moins deux cuves de stockage,
- un orifice d'échappement agencé à la sortie de ladite chambre pour la coulée du mélange réactif,
- des moyens de commande pour piloter le processus de mélange et de coulée, et comportant un organe d'obturation destiné à fermer ou à ouvrir l'orifice d'échappement respectivement avant et pendant la coulée du mélange réactif, et un clapet de commande pour le dégazage.

### Etat de la technique

Dans les dispositifs mélangeurs à basse pression du genre mentionné, des produits de base préalablement dégazés arrivent dans la chambre de mélange, laquelle contient de l'air ambiant. Lors du brassage des produits dans la chambre de mélange, l'air est emprisonné dans les produits sous forme de bulles de diamètres plus ou moins importants. Pour obtenir un produit compact, il est alors nécessaire d'effectuer une précoulée perdue dans un bac à déchets jusqu'à ce que l'opérateur juge visuellement que le mélange est exempt de bulles. Selon le débit de la machine, la forme du mélangeur et l'expérience de l'opérateur, la perte de matière peut se situer entre 0,5 kg et 5 kg.

Le document Patent Abstracts of Japan, vol. 011, N°238 correspondant à la demande JP 61 069406, se rapporte à une installation de coulée sous vide, dans laquelle le moule se trouve intégré à l'intérieur de l'enceinte sous vide. La chambre de mélange de l'installation est montée sur l'enceinte, et le vide est effectué naturellement.

Le document Patent Abstracts of Japan, Vol. 011, N° 114, correspondant à la demande JP 61 258712, se rapporte à une installation de moulage ayant une cuve tampon faisant partie intégrante de la chambre de mélange. Le vide est effectué après la coulée des deux composants, ce qui nécessite une chambre de mélange d'un volume plus important que la pièce à couler. Cette chambre doit également prendre en compte le volume de moussage du produit lors du dégazage.

Le document Patent Abstracts of Japan, Vol.010. N° 311 correspondant à la demande JP 61 121903, mentionne un procédé de moulage où la coulée du mélange est effectué dans une cuve tampon, laquelle est ensuite isolée au moyen de vannes amont et aval. La cuve tampon est ensuite mise sous vide, permettant le dégazage du produit mélangé. Le produit est finalement poussé dans le moule par de l'air comprimé.

Les inconvénients de ce dispositif connu sont les suivants:
- le dégazage s'effectue après la coulée des composants,
- la coulée est tributaire du volume de la cuve tampon qui doit tenir compte de l'effet de moussage du produit lors du dégazage.

### Objet de l'invention

L'objet de l'invention consiste à réaliser un dispositif mélangeur perfectionné destiné à supprimer toute précoulée perdue de matériaux plastiques polymérisables et compacts, et permettant de réaliser la coulée indépendamment du volume des pièces.

Le dispositif de l'invention est caractérisé en ce que le clapet de commande est agencé pour provoquer la mise sous vide du volume interne de la chambre de mélange avant l'admission des produits de base, et lorsque l'organe d'obturation est en position fermée.

Selon un mode de réalisation préférentiel l'organe d'obturation comprend un clapet anti-retour taré en pression, et s'ouvrant automatiquement dès que la pression interne dépasse un seuil de réglage prédéterminé. Le clapet anti-retour est sollicité en position fermée par des moyens élastiques, et/ou par l'effet de dépression régnant dans la chambre de mélange lors de la mise sous vide. Le clapet de commande est relié à un circuit de purge en liaison avec une pompe à vide ou autre moyen extracteur d'air par dépression.

La coulée perdue est supprimée grâce à l'isolement et à la mise sous vide de la chambre de mélange avant l'admission des produits de base. Un tel dispositif réduit les déchets de produits polymérisables, et permet une production unitaire car la première coulée est directement exploitable. Le mélange des produits s'effectue en milieu anérobique.

Selon une caractéristique de l'invention, les moyens de commande comportent un premier distributeur pour le pilotage des vannes d'admission, et un deuxième. distributeur pour l'actionnement du clapet de commande vers l'état ouvert ou fermé, le processus étant réglé pour provoquer d'une part la fermeture des vannes d'admission lorsque le clapet de commande se trouve dans l'état ouvert pour la mise sous vide, et d'autre part l'ouverture desdites vannes après le passage du clapet de commande vers l'état fermé, après l'aspiration complète de l'air contenu dans la chambre de mélange.

Les actionneurs des premiers et deuxièmes distributeurs peuvent fonctionner par voie pneumatique, ou électrique, ou hydraulique, en fonction du type de vannes ou clapets utilisés dans l'installation de coulée.

Selon une autre caractéristique de l'invention, le premier distributeur pilote aussi des vannes de dérivation destinées à recycler les produits de base vers les cuves de stockage lors de la fermeture des vannes d'admission, et un clapet de rinçage en liaison avec un circuit de nettoyage à solvant pour nettoyer l'intérieur de la chambre de mélange en fin de cycle de coulée.

La mise en oeuvre d'un cycle automatique de mise sous vide permet une traçabilité lorsque le vide est atteint, et supprime de ce fait tout contrôle visuel de l'opérateur au début de la coulée. Le système est applicable à un mélangeur statique ou dynamique basse pression, ainsi qu'à un mélangeur haute pression.

### Description sommaire des dessins

D'autres avantages et caractéristiques ressortiront plus clairement de la description qui va suivre d'un mode de réalisation de l'invention donné à titre d'exemple non limitatif, et représenté aux dessins annexés, dans lesquels:
- la figure 1 est un vue schématique de l'installation de coulée équipée de la chambre de mélange selon l'invention ;
- la figure 2 montre une vue en coupe de la tête de coulée à mélange statique,
- la figure 3 représente une variante de la figure 2 pour une tête de coulée avec une turbine de mélange dynamique.

### Description d'un mode de réalisation préférentiel

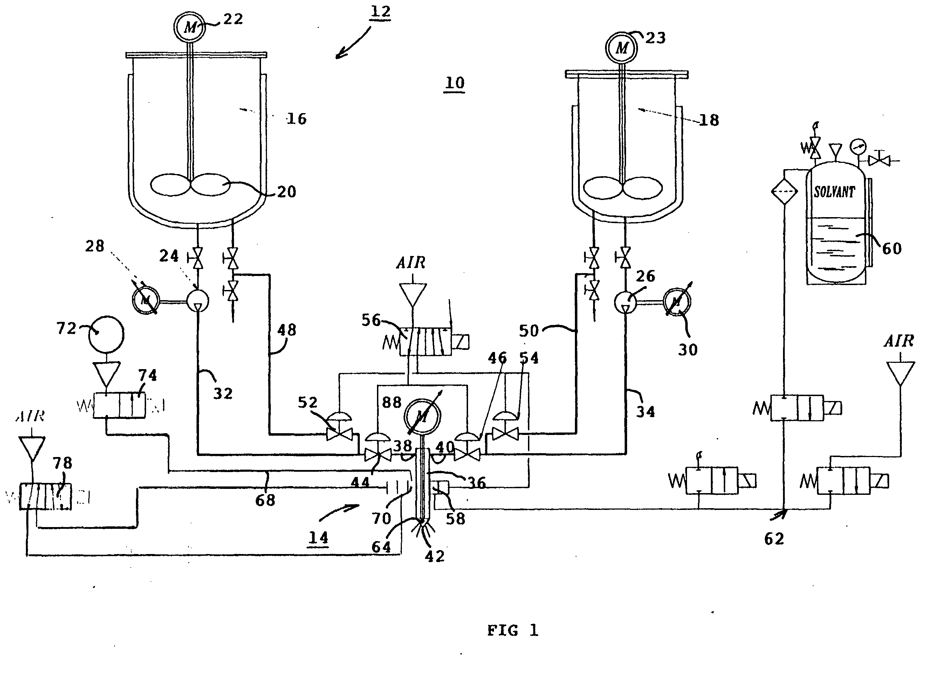

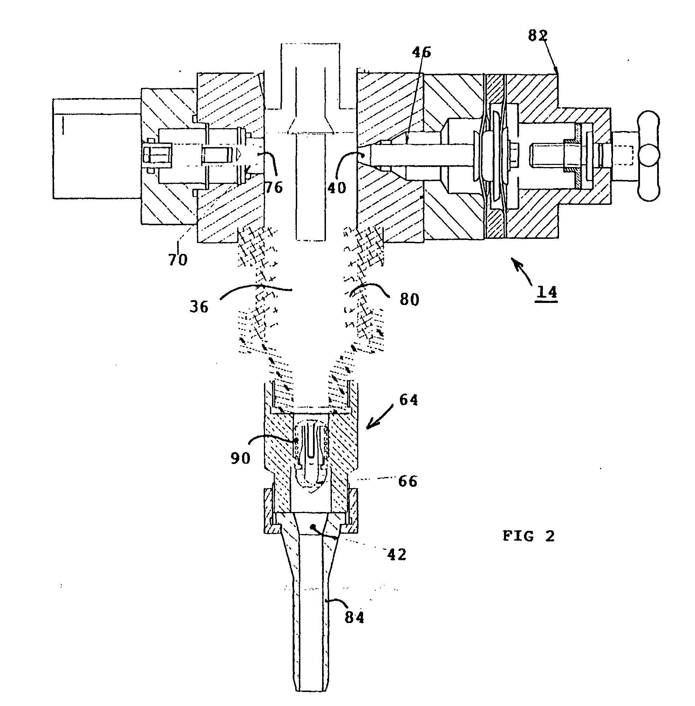

En référence aux figures 1 et 2, une installation de coulée 10 de produits synthétiques à base de produits polymérisables, comporte un dispositif de stockage et de dosage 12 des matières de base entrant dans la composition chimique du mélange réactif, et un dispositif mélangeur 14 associé à des moyens de coulée pour le remplissage d'un moule de formage.

Le dispositif de stockage et de dosage 12 comprend au moins deux cuves de stockage 16, 18 destinées à contenir les matières de base, lesquelles sont portées à une température prédéterminée par des moyens de chauffage (non représentés). Chaque cuve de stockage 16, 18 peut être équipée d'un agitateur 20, 21 mécanique entraîné en rotation par un moteur 22, 23 pour assurer l'homogénéisation de la température interne, et le brassage des produits de base, notamment en cas d'adjonction d'additifs (plastifiants, pigments, colorants, stabilisateurs, catalyseurs, etc.) . L'air inclus dans chaque cuve de stockage 16, 18 lors des phases de préparation et de transfert, est extrait au moyen d'une pompe à vide pour réaliser une opération de dégazage.

Le produit de base conditionné dans chaque cuve de stockage 16, 18 est ensuite dosé par une pompe de transfert 24, 26 laquelle est entraînée par un moteur 28, 30 à vitesse fixe ou variable. Une tuyauterie 32, 34 relie chaque pompe de transfert 24, 26 au dispositif mélangeur 14, lequel réceptionne les produits de base selon des proportions et des débits bien définis en fonction de la nature des produits réactifs.

Les pompes de transfert 24, 26 peuvent être du type à engrenages, péristaltiques, ou à pistons, et entraînées par des moteurs 28, 30 électriques, pneumatiques ou hydrauliques.

Le dispositif mélangeur 14 est conformé en tête de coulée verticale ayant une chambre de mélange 36 équipée à la partie supérieure d'orifices d'admission 38, 40 des produits de base, et à la partie inférieure d'un orifice d'échappement 42 pour la coulée du mélange réactif. Chaque orifice d'admission 38, 40 est branché à la tuyauterie 32, 34 de la pompe de transfert 24, 26 correspondante par l'intermédiaire d'une vanne d'admission 44, 46.

Lorsque l'installation 10 n'est pas en phase de coulée, les produits de base peuvent retourner vers les cuves de stockages 16, 18 à travers un circuit de recyclage 48, 50, lequel est muni d'au moins une vanne de dérivation 52, 54.

Un premier distributeur 56 pilote les différentes vannes d'admission 38, 40 et de dérivation 52, 54, par voie pneumatique. Le fonctionnement en recyclage à l'arrêt de la coulée, est obtenu lors de la fermeture des vannes d'admission 44, 46, et de l'ouverture des vannes de dérivation 52, 54. La commande inverse pour la coulée provoque l'arrêt du recyclage par la fermeture des vannes de dérivation 52, 54, et l'ouverture des vannes d'admission 44, 46. Le premier distributeur 56 commande également un clapet de rinçage 58 associé à la tête de coulée du dispositif mélangeur 14, et destiné à recevoir un solvant pour assurer le nettoyage interne de la chambre de mélange 36 en fin de cycle de coulée. L'agent solvant est contenu dans un récipient 60, et est conduit vers le clapet de rinçage 58 au moyen d'un système de vannes 62.

Selon l'invention, la sortie de la chambre de mélange 36 est pourvue d'un organe d'obturation 64 situé avant l'orifice d'échappement 42, et destinée à occuper une position fermée et une position ouverte respectivement avant et pendant la coulée. L'organe de fermeture 64 peut être constitué à titre d'exemple par un clapet anti-retour 66 taré en pression (figure 2) lequel s'ouvre automatiquement dès que la pression du produit mélangé à l'intérieur de la chambre de mélange 36 dépasse le seuil de réglage du clapet anti-retour 66.

Avant l'ouverture des vannes d'admission 44, 46, le volume interne de la chambre de mélange 36 est mis sous vide au moyen d'un circuit de purge 68 comprenant un clapet de commande70 relié à la pompe à vide 72 par l'intermédiaire d'une vanne 74. Le clapet de command 70 est accolé à un orifice 76 d'accès à la chambre de mélange 36, et est actionné par un deuxième distributeur 78 pneumatique vers l'état fermé ou ouvert.

Il est clair que la pompe à vide 70 peut être remplacée par un système éjecteur à Venturi, ou par tout autre moyen extracteur d'air par dépression.

Le clapet de commande 70 pour la mise sous vide peut être remplacé par l'une des vannes d'admission non utilisée de la chambre de mélange 36 dans le cas d'une tête de coulée équipée d'une pluralité de vannes d'admission.

En référence à la figure 2, le dispositif mélangeur 14 comporte une chambre 36 à mélange statique, dans laquelle est représentée une seule vanne d'admission 46, et le clapet de commande 70 du circuit de purge 68. La chambre de mélange 36 tubulaire est dotée d'une série d'ailettes 80 permettant de mélanger les produits en couches parallèles sur la section du tube. La vanne d'admission 40 est logée avantageusement dans un régulateur de pression 82 piloté par le premier distributeur 56.

Un embout de coulée 84 est avantageusement monté sur l'orifice d'échappement 42 à la sortie de la chambre de mélange 36.

Une canule (non représentée) souple de longueur variable peut être adaptée à l'embout de coulée 84 en fonction de l'emplacement du moule de formage. Dans ce cas, le clapet anti-retour 66 sera installé en bout de la canule, de manière à effectuer le vide sur l'ensemble chambre de mélange 36 et canule.

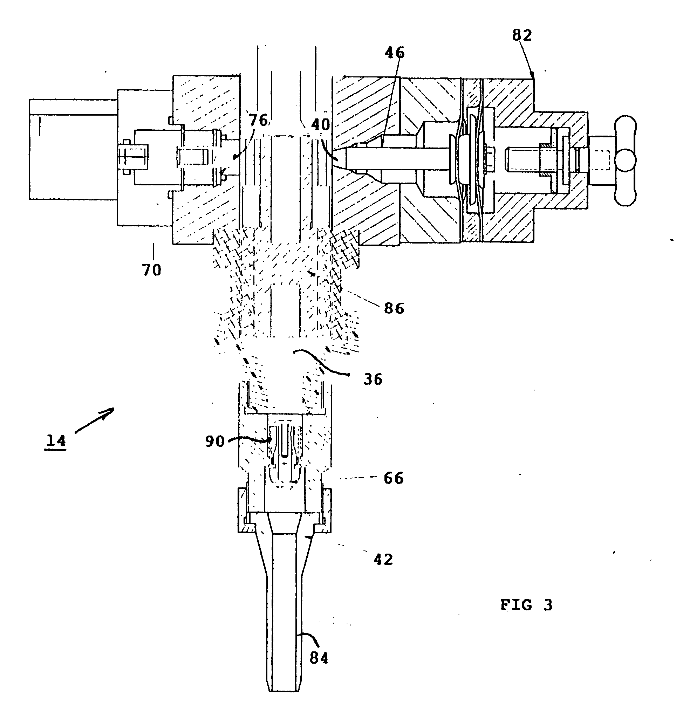

En référence à la figure 3, les produits de base introduits dans la chambre de mélange 36 sont brassés au moyen d'une turbine 86 entraînée à vitesse élevée par un moteur 88 rotatif. La turbine 88 réalise un mélange dynamique basse pression de plusieurs produits.

L'opération de coulée selon l'invention s'effectue de la manière suivante :

Le clapet anti-retour 66 se trouve fermé en obturant la sortie de la chambre de mélange 36. Le premier distributeur 56 assure la fermeture des vannes d'admission 44, 46, et l'ouverture des vannes de dérivation permettant le recyclage des produits de base vers les cuves de stockage 16, 18. Le clapet de commande 70 est actionné par le deuxième distributeur 78 vers l'état ouvert pour autoriser la mise sous vide de la chambre de mélange '36 par l'intermédiaire de la vanne 74. Le vide dans la chambre de mélange 36 renforce le maintien du clapet anti-retour 66 en position fermée. Après l'aspiration complète de l'air ambiant contenu initialement dans la chambre de mélange 36, il est ensuite possible d'ouvrir les vannes d'admission 44 ,46 pour le mélange sans air des produits de base dans la tête de coulée.

La présence du clapet anti-retour 66 rallonge la durée de mélange des produits de base à l'intérieur de la chambre de mélange 36. La coulée commence après l'ouverture du clapet anti-retour 66 dès que la pression interne dépasse le seuil de réglage. Le clapet anti-retour 66 permet de maintenir le vide avant la première coulée, et produit d'autre part une contre pression lors de la coulée.

La mise en oeuvre de ce processus permet de supprimer toute opération de précoulée perdue grâce à l'isolement de la chambre de mélange 36 par la fermeture du clapet anti-retour 66, et la mise sous vide de la tête de coulée avant l'admission des produits de base. La coulée s'effectue alors sans perte de matière.

Ce processus est également applicable à une tête de coulée à mélange haute pression, dans laquelle les produits sont poussés dans la chambre de mélange à travers les clapets injecteurs sous une pression comprise entre 100 et 250 bars.

Dans les cas des figures 2 et 3, le clapet anti-retour 66 est doté d'un ressort de rappel 90 sollicitant la fermeture du clapet , même en l'absence de vide dans la chambre de mélange 36.

Il est clair que le clapet anti-retour 66 peut être remplacé par tout autre organe d'obturation, comprenant par exemple une membrane associée à un ressort en fil cambré, un tube élastique, etc.

Les distributeurs 56, 78 peuvent également comporter des actionneurs fonctionnant par voie électrique ou hydraulique en fonction du type de vannes ou clapets utilisés dans l'installation coulée.

## Revendications

1. Procédé de coulée de matériaux plastiques à base de produits polymérisables, utilisant un dispositif mélangeur comprenant :
- une chambre de mélange (36) pour la réception des produits de base entrant dans la composition chimique du mélange réactif,
- des orifices d'admission (38, 40) ménagés à l'entrée de ladite chambre et coopérant avec des vannes d'admission (44, 46) des produits de base en provenance d'au moins deux cuves de stockage (16, 18),
- un orifice d'échappement (42) agencé à la sortie de ladite chambre pour la coulée du mélange réactif,
- des moyens de commande pour piloter le processus de mélange et de coulée, et comportant un organe d'obturation (64) destiné à fermer ou à ouvrir l'orifice d'échappement (42) respectivement avant et pendant la coulée du mélange réactif, et un clapet de commande (70) pour le dégazage,
procédé **caractérisé en ce que**:
le volume interne de la chambre de mélange (36) est mis sous vide, par l'intermédiaire du clapet de commande (70), avant l'admission des produits de base dans la chambre de mélange, tandis que l'organe d'obturation (64) est en position fermée, l'organe d'obturation (64), comprenant un clapet anti-retour (66) taré en pression, s'ouvrant automatiquement dès que la pression interne de la chambra de mélange dépasse un seuil de réglage prédéterminé.

2. Procédé selon la revendication 1, **caractérisé en ce que** le clapet anti-retour (66) est sollicité en position fermée par des moyens élastiques, et/ou par l'effet de dépression régnant dans la chambre de mélange (36) lors de la mise sous vide.

3. Procédé salon la revendication 2, **caractérisé en ce que** les moyens élastiques sollicitant le clapet anti-retour (66) en position fermée comportent un ressort de rappel agissant sur une membrane ou un tube déformable.

4. Procédé selon l'une des revendications 1 à 3, **caractérisé en ce que** la mise sous vide de la chambre de mélange(36) est réalisée au moyen d'un circuit de purge (68) relié au clapet de commande (70) et en liaison avec une pompe à vide (72) ou un autre moyen extracteur d'air par dépression.

5. Procédé selon la revendication 4, **caractérisé en ce que** les vannes d'admission (44, 46) sont pilotées par un premier distributeur (56), le clapet de commande (70) étant actionné vers l'état ouvert ou fermé par un deuxième distributeur (78), la fermeture des vannes d'admission (44, 46) étant provoquée lorsque le clapet de commande (70) se trouve dans l'état ouvert pour la mise sous vide et l'ouverture desdites vannes d'admission étant provoquée après le passage du clapet de commande (70) vers l'état fermé en fin d'aspiration de l'air contenu dans la chambre de mélange (36).

6. Procédé selon la revendication 5, **caractérisé en ce que** les actionneurs des premiers et deuxièmes distributeurs (56,78) fonctionnent par voie pneumatique, ou électrique, ou hydraulique en fonction du type de vannes ou clapets utilisés dans l'installation de coulée.

7. Procédé selon l'une des revendications 5 ou 6, **caractérisé en ce que** le premier distributeur (56) pilote également des vannes de dérivation (52, 54) destinées à recycler les produits de base vers les cuves de stockage (16, 18) lors de la fermeture des vannes d'admission (44, 46), et un clapet de rinçage (58) en liaison avec un circuit de nettoyage à solvant (60, 62) pour nettoyer l'intérieur de la chambre de mélange (36) en fin de cycle de coulée.

8. Procédé selon l'une des revendications 1 à 7, **caractérisé en ce qu'**il assure un mélange statique des produits de base dans la chambre de mélange (36) par des moyens à ailettes (80) disposés dans la chambre de mélange.

9. Procédé selon l'une des revendications 1 à 7, **caractérisé en ce qu'**il réalise un mélange dynamique de plusieurs produits de base dans la chambre de mélange (36) au moyen d'une turbine (86) à axe vertical, entraînée par un moteur (88) et disposée dans la chambre de mélange.

## Claims

1. A process for casting polymerizable product-based plastic materials, using a mixing device comprising:
- a mixing chamber (36) for receipt of the base products forming the chemical composition of the reactive mixture,
- inlet orifices (38, 40) arranged at the inlet of said chamber and operating in conjunction with inlet valves (44, 46) for inlet of the base products coming from at least two storage tanks (16, 18),
- an outlet orifice (42) arranged at the outlet of said chamber for casting of the reactive mixture,
- control means to control the mixing and casting process, and comprising a closing means (64) designed to close or open the outlet orifice (42) respectively before and during casting of the reactive mixture, and a control valve (70) for dearation,
process **characterized in that**:
a vacuum is created in the internal volume of the mixing chamber (36) by means of the control valve (70) before the base products are inlet to the mixing chamber, whereas the closing means (64) is in the closed position, the closing means (64) comprising a pressure-calibrated check valve (66) opening automatically as soon as the internal pressure of the mixing chamber exceeds a preset threshold.

2. The process according to claim 1 **characterized in that** the check valve (66) is biased to the closed position by flexible means and/or by the negative pressure effect prevailing in the mixing chamber (36) when the vacuum is created.

3. The process according to claim 2 **characterized in that** the flexible means biasing the check valve (66) to the closed position comprise a return spring acting on a membrane or a deformable tube.

4. The process according to one of the claims 1 to 3 **characterized in that** creation of the vacuum in the mixing chamber (36) is performed by means of a purge circuit (68) connected tc the control valve (70) and in connection with a vacuum pump (72) or another means of extracting air by negative pressure.

5. The process according to claim 4 **characterized in that** the inlet valves (44, 46) are controlled by a first distributor (56), the control valve (70) being actuated to the open or closed state by a second distributor (78), closing of the inlet valves (44, 46) being caused when the control valve (70) is in the open state for vacuum creation and opening of said inlet valves being caused after the control valve (70) has moved to the closed state after completion of the suction operation of the air contained in the mixing chamber (36).

6. The process according to claim 5 **characterized in that** the actuators of the first and second distributors (56, 78) operate by pneumatic, or electric, or hydraulic means depending on the type of valves used in the casting installation.

7. The process according to one of the claims 5 or 6 **characterized in that** the first distributor (56) also controls bypass valves (52, 54) designed to recycle the base products to the storage tanks (16, 18) when the inlet valves (44, 46) are closed, and a rinsing valve (58) connected with a solvent cleaning circuit (60, 62) to clean the inside of the mixing chamber (36) at the end of the casting cycle.

8. The process according to one of the claims 1 to 7 **characterized in that** it performs static mixing of the base products in the mixing chamber (36) by means of fins (80) arranged in the mixing chamber.

9. The process according to one of the claims 1 to 7 **characterized in that** it performs dynamic mixing of several base products in the mixing chamber (36) by means of a vertical-axis turbine (86) driven by a motor (88) and arranged in the mixing chamber.

## Patentansprüche

1. Verfahren zum Gießen von Kunststoffmaterialien auf der Grundlage polymerisierbarer Produkte, bei dem eine Mischvorrichtung eingesetzt wird, die umfasst:
- eine Mischkammer (36) zur Aufnahme der in die chemische Zusammensetzung des Reaktionsgemischs eingehenden Basisprodukte,
- Einlassöffnungen (38, 40), die am Eingang der Kammer vorgesehen sind und mit Einlassventilen (44, 46) für die Basisprodukte zusammenwirken, die von mindestens zwei Lagerbehältern (16, 18) zugeführt werden,
- eine Auslassöffnung (42), die am Ausgang der Kammer zum Vergießen des Reaktionsgemischs angeordnet ist,
- Steuerungsvorrichtungen zum Steuern des Misch- und Gießprozesses, die ein Verschlusselement (64), das die Auslassöffnung (42) jeweils vor dem und während des Vergießen/s des Reaktionsgemischs verschließen bzw. öffnen soll, und eine Steuerklappe (70) für die Gasabscheidung umfassen,
ein Verfahren, das **dadurch gekennzeichnet ist, dass**:
vor der Zuführung der Basisprodukte in die Mischkammer (36) der Innenraum der Mischkammer mittels der Steuerungsklappe (70) unter Vakuum gesetzt wird, während das Verschlusselement (64) in geschlossener Position ist, wobei das Verschlusselement (64) eine druckgeeichte Rückschlagklappe (66) umfasst, die sich automatisch öffnet, sobald der Innendruck der Mischkammer einen vorbestimmten Einstellungsschwellenwert überschreitet.

2. Verfahren nach Anspruch 1, **dadurch gekennzeichnet, dass** die Rückschlagklappe (66) durch elastische Mittel und/oder durch die Wirkung des in der Mischkammer (36) herrschenden Unterdrucks in ihre geschlossene Position gezogen wird, wenn diese unter Vakuum gesetzt wird.

3. Verfahren nach Anspruch 2, **dadurch gekennzeichnet, dass** die elastischen Mittel, welche die Rückschlagklappe (66) in die geschlossene Position ziehen, eine Rückholfeder umfassen, die auf eine Membran oder eine verformbare Röhre einwirkt.

4. Verfahren nach einem der Ansprüche 1 bis 3, **dadurch gekennzeichnet, dass** das Unter-Vakuum-Setzen der Mischkammer (36) mittels eines Luftabzugskreislaufs (68) erfolgt, der mit der Steuerungsklappe (70) und mit einer Vakuumpumpe (72) oder einer anderen Vorrichtung zum Luftabzug durch Unterdruck verbunden ist.

5. Verfahren nach Anspruch 4, **dadurch gekennzeichnet, dass** die Einlassventile (44, 46) von einem ersten Verteiler (56) gesteuert werden, wobei die Steuerungsklappe (70) von einem zweiten Verteiler (78) in Richtung auf den offenen oder geschlossenen Zustand gesteuert und das Schließen der Einlassventile (44, 46) bewirkt wird, wenn sich die Steuerungsklappe (70) für das Unter-Vakuum-Setzen im offenen Zustand befindet, und die Einlassventile aufgesteuert werden, wenn die Steuerungsklappe (70) am Ende des Ansaugens der in der Mischkammer (36) enthaltenen Luft in ihren geschlossenen Zustand gewechselt hat.

6. Verfahren nach Anspruch 5, **dadurch gekennzeichnet, dass** die Aktuatoren des ersten und zweiten Verteilers (56, 78) pneumatisch, elektrisch oder hydraulisch arbeiten, je nach Art der in der Gießanlage verwendeten Ventile oder Klappen.

7. Verfahren nach einem der Ansprüche 5 oder 6, **dadurch gekennzeichnet, dass** das erste Verteiler (56) auch Abzweigungsventile (52, 54) steuert, mit Hilfe derer die Basisprodukte beim Schließen der Einlassventile (44, 46) zu den Lagerbehältern (16, 18) zurückgeführt werden sollen, sowie ein Spülventil (58), das mit einem Kreislauf zur Reinigung mit Lösungsmittel (60, 62) verbunden ist, um das Innere der Mischkammer (36) am Ende des Gusszyklus' zu reinigen.

8. Verfahren nach einem der Ansprüche 1 bis 7, **dadurch gekennzeichnet, dass** es eine statische Mischung der Basisprodukte in der Mischkammer (36) mit Hilfe von in der Mischkammer angeordneten Schaufelvorrichtungen (80) gewährleistet.

9. Verfahren nach einem der Ansprüche 1 bis 7, **dadurch gekennzeichnet, dass** es eine dynamische Mischung mehrerer Basisprodukte in der Mischkammer (36) mit Hilfe einer Turbine (86) mit vertikaler Achse gewährleistet, die von einem Motor (88) angetrieben wird und in der Mischkammer angeordnet ist.
